# EUROPEAN PATENT APPLICATION

(11) **EP 1 469 398 A1**
(43) Date of publication of application: **20.10.2004**
(21) Application number: 02786125.1
(22) Date of filing: 17.12.2002
(51) Int. Cl.: G06F 17/28

(54) **TEXT GENERATING METHOD AND TEXT GENERATOR**

(30) Priority: 27.12.2001 JP 2001395618
(71) Applicant: National Institute of Information and Communications Technology, Koganei-Shi, Tokyo (JP)
(72) Inventor: Uchimoto, Kiyotaka, c/o Communications Res. Lab., Koganei-shi, Tokyo (JP); Isahara, Hitoshi, c/o Communications Res. Lab., Koganei-shi, Tokyo (JP)
(74) Representative: Finnie, Peter John
(86) International application number: PCT/JP2002/013185
(87) International publication number: WO 2003/056451

(57) **Abstract**

The present invention provides method and apparatus for generating a natural text from at least one keyword. The keyword is input by a keyword input unit, and a text and phrase searching and extracting unit extracts any text or phrase containing keywords, if any. A text generation unit morphologically analyzes and parses the extracted text, and outputs a natural text by combining the text with the keyword.

## Description

### Technical Field

The present invention relates to a method and apparatus for natural language processing. In particular, the present invention is characterized by a technique for generating a text from several keywords.

### Background Art

The development of techniques for parsing or generating a text of a language with a computer has been well in advance. To generate a text as natural as possible is one of the primary concerns in text generation. A requirement for the generating method is to generate a text that looks almost the same as the one generated by humans.

With several keywords input, a technique to generate a natural looking text using these keywords may help ones such as foreigners who are not familiar with sentence construction.

Since simply naming words in sequence conveys an intention to another person, the technique may be used in a similar way as a machine translation is used.

For example, text generation techniques may be expected to assist aphasic. Currently, a total of 100,000 persons suffer from aphasia in Japan. It is said that about 80 percent of the aphasics are able to vocalize a sentence in a broken manner (namely, a sequence of words), or are able to select several words to make themselves understood if several word candidates are presented.

For example, a sequence of words "kanojo (she) /kouen (park)/itta (went)" is spoken or selected, and then, a more natural sentence "kanojo wa kouen e itta. (She went to a park)" or "kanojo to kouen e itta. (I went to a park with her.)" may be generated and presented. The technique thus helps a person communicate with an aphasic patient.

Already available techniques for generating a natural text in response to the input of at least one keyword include a technique for generating a sentence using a template, and a technique for searching a database for a sentence in response to the keyword.

These techniques are effective only when the keyword matches a template, or only when the keyword matches a sentence in the database. In any case, the types of sentence generated are limited.

Another technique has been proposed in which a keyword is replaced with a synonym to increase a hit rate in searching. Since variations to be generated from a keyword become wide, the technique is not sufficient.

### Disclosure of Invention

The present invention has been developed in view of the aforementioned background, and provides a generating method for generating a natural text from at least one keyword.

More specifically, the present invention generates a text based on each of the following steps.

In an input step for inputting at least one word serving as keyword, words "kanojo (she)", "kouen (park)", and "itta (went)" are input.

The process then proceeds to an extracting step for extracting, from a database, a text or a phrase related to the keyword. The database contains a number of sample sentences, and for example, texts and phrases containing the word "kanojo" are searched and extracted.

By combining the extracted text or phrase, an optimum text using the input keyword is generated. If a text containing "kanojo", "e", and "itta" is present in the database in this text generation step, a combination results in a text "kanjojo wa kouen e itta".

Texts only may be extracted in the extracting step, and the extracted text may be morphologically analyzed and parsed to acquire a dependency structure of the text. By forming a dependency structure containing the keyword, a more natural text is generated.

In the course of forming the dependency structure containing the keyword, a dependency probability of the entire text is determined using a dependency model. A text having a maximum probability is generated as an optimum text.

In accordance with the present invention, a text having a natural word order may be generated using a word order model. In the text generation step, the word order model may be used in the middle of or prior to the generation of the dependency structure in the text generation step.

It is determined in the text generation step based on a learning model whether there is a word to be inserted between any two keywords in all arrangements of the keywords. Word insertion is performed starting with a word having the highest probability. A word insertion process starts with a word having the highest probability in the learning model. The word insertion process is repeated until a probability that there is no word to be inserted between any keywords becomes the highest. Since the inserted word is included as a keyword, a further word insertion may be performed between the inserted words. An optimum word insertion is thus performed. A natural text is generated even when the number of given keywords is small.

In accordance with the present invention, the database may contain a text having a characteristic text pattern, and a text accounting for the characteristic text pattern may be generated in the text generation step.

For example, the database may contain texts characteristic of writing styles and expressing, and a text generated becomes compliant with the characteristic writing styles and expression.

The present invention provides a text generation apparatus for generating a text of a sentence. The text generation apparatus includes input means for inputting at least one word as a keyword, extracting means for extracting, from a database containing a plurality of texts, a text or a phrase related to the keyword, and text generation means for generating an optimum text based on the input keyword by combining the extracted text or phrase.

In an arrangement where the text extracting means extracts the text, the text generation means may include parser means for morphologically analyzing and parsing the extracted text, and acquiring a dependency structure of the text, and dependency structure generation means for generating a dependency structure containing the keyword.

In the text generation means, the dependency structure generation means may determine the probability of dependency of the entire text using a dependency model, and generates a text having a maximum probability as an optimum text.

In the middle of or prior to the generation of the dependency structure, the text generation means may generate an optimum text having a natural word order based on a word order model.

The text generation means may include word insertion means that determines, using a learning model, whether there is a word to be inserted between any two keywords in all arrangements of the keywords, and performs a word insertion process starting with a word having the highest probability, wherein the word insertion means repeats the word insertion until a probability that there is no word to be inserted between any keywords becomes the highest.

In the text generation apparatus, as already discussed, the database contains a text having a characteristic text pattern, and a text in compliance with the characteristic text pattern is generated.

With pattern selecting means provided, the text generation apparatus may appropriately select and switch a plurality of text patterns.

### Brief Description of the Drawings

Fig. 1 illustrates a text generation apparatus in accordance with the present invention.
Fig. 2 is a subgraph illustrating a dependency structure analyzed by a text generation unit.
Fig. 3 is a dependency tree generated by the text generation unit.
Fig. 4 is a dependency tree in another sample sentence.
Fig. 5 illustrates an example of calculation of a probability that an order of word dependency is appropriate.

Reference numerals are designated as follows: 1: text generation apparatus, 2: keyword to be input, 3: output text, 10: keyword input unit, 11: text and phrase searching and extracting unit, 12: text generation unit, 12a: parser, 12b: constructor, 12c: evaluator, and 13: database

### Best Mode for Carrying Out the Invention

The embodiments of the present invention will now be discussed with reference to the drawings. The present invention is not limited to the following embodiments and may be appropriately modified.

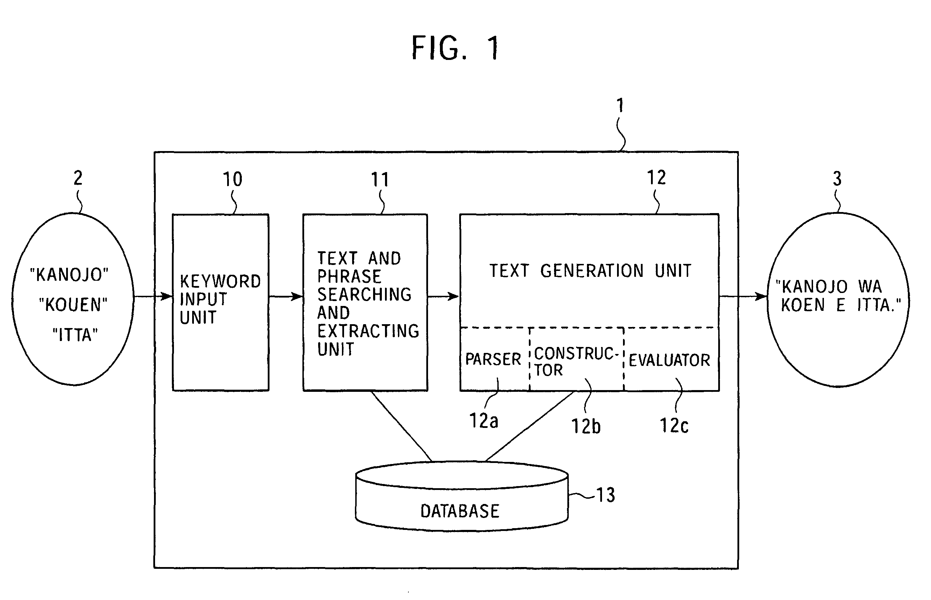

Fig. 1 illustrates a text generation apparatus (1) in accordance with the present invention. The text generation apparatus (1) includes a keyword input unit (10), a text and phrase searching and extracting unit (11), a text generation unit (12), and a database (13). The database (13) contains beforehand a plurality of texts in a table, and the content of the table may be modified as necessary. By modifying the content, a variety of texts may be produced as will be discussed later.

If the keyword input unit (10) inputs three keywords (2) of "kanojo", "kouen", and "itta", the text and phrase searching and extracting unit (11) searches and extracts a text or a phrase, each containing at least one of the keywords from the database (13).

Based on the extracted text or phrase, the text generation unit (12) combines these, thereby outputting a natural text (3) "kanojo wa kouen e itta."

This process will be discussed in more detail. In response to the keyword input by the keyword input unit (10), the text and phrase searching and extracting unit (11) extracts a sentence having n keywords from the database (13). It is perfectly acceptable if one keyword is contained in the sentence. The extracted sentence is then sent to the text generation unit (12).

The text generation unit (12) includes the parser (12a), the constructor (12b), and the evaluator (12c). The parser (12a) morphologically analyzes and parses the extracted sentence.

Available as a morphological analyzing method is a method of analyzing a morpheme based on an ME model, as disclosed in Japanese Patent Application No. 2001-139563 applied by the applicant of this application.

A likelihood as a morpheme is expressed by probability in the application of morphological analysis to a ME model.

More specifically, given a sentence, a morphological analysis of that sentence is interpreted as assigning one of two identification codes, namely, "1" or "0" indicating whether the character string is a morpheme, to the character string.

If the character string is a morpheme, "1" is divided by the number of syntactic attributes to impart syntactic attributes. If the number of syntactic attributes is n, an identification code of "0" to "n" is assigned to each character string.

In a technique using an ME model in morphological analysis, a likelihood that a character string is a morpheme and has any syntactic attribute is applied to a function of probability distribution in the ME model. In the morphological analysis, regularity is found in the probability representing the likelihood.

Features in use include information representing the character type of a character string of interest, whether that character string is registered in a dictionary, a change in character type from an immediately preceding morpheme, and part of speech of the immediately preceding morpheme. If a single sentence is given, the sentence is divided into morphemes so that the product of probabilities is maximized, and syntactic attributes are imparted to the morphemes. Any known algorithm may be used to search for an optimum solution.

The morphological analysis method using the ME model provides excellent performance, for example, performs an effective morphological analysis even if a sentence contains an unknown word. In the embodiments of the present invention, the above method is particularly effective. The present invention is not limited to the above method. Any morphological analysis method may be used.

A parsing method using an ME model may be used as a parsing method of the parser (12a). Any other parsing method may be used. The following method is used in one embodiment. The text generation unit (12) may references the database (13), and learns a plurality of texts contained the database (13) in the ME model.

The dependency analysis out of the parsing analysis is introduced. The dependency relation in Japanese language regarding which word modifies which word is said to have the following characteristics.
(1) The dependency relation is one direction from left to right in a sentence.
(2) The dependency relation does not cross. (Hereinafter, this characteristic is referred to non-crossing condition).
(3) A modifying segment has only one modified segment.
(4) In many cases, the determination of a modification target requires no preceding context.

With view to these characteristics, one embodiment of the present invention achieves a high analysis precision by combining a statistical technique and a method of analyzing a sentence from the end of the sentence to the head of the sentence.

Two phrases at a time are successively picked up from the end of the sentence, and whether or not the two phrases are in a dependency relation is statistically determined. In such a case, information in each phrase or information between the phrases are utilized as a feature, and which feature to use determines the precision.

The phrase is divided into a front portion as a headword, and a back portion as a postposition or a conjugation. Together with the feature of each portion, a distance between the phrases and the presence or absence of a punctuation are taken into consideration as features.

Furthermore considered are the presence or absence of parentheses, the presence or absence of a postposition "wa", whether or not the same postposition or the same conjugation as a modifying phrase is present between phrase, and a combination of features.

The ME model handles a variety of these features.

This method achieves a precision as high as a known method using a decision tree or a method of maximum likelihood estimation although learning data is in size as much as one-tenth the size of the data of the known technique. This technique achieves the highest standard of precision as a system based on learning.

In the known art, a feature effective to predict whether two phrases are in a dependency relation is learned from information obtained from learning data. A more precise dependency analysis is performed by learning information effective to predict whether a preceding phrase is in any of three states of "modifying a phrase coming beyond a subsequent phrase", "modifying the subsequent phrase", and "modifying a phrase prior to the subsequent phrase".

The use of the morphological analysis method and parsing method, based on the ME model, allows the parser (12a) to precisely analyze a text searched and extracted from the database (13), and acquire a dependency structure of the text. The dependency structure is represented in a subgraph. In the subgraph, each node represents a phrase, and each arc represents a dependency.

All subgraphs containing at least one keyword are extracted, and the frequency of occurrence of each subgraph is examined. The node is considered to have generalized information (proper noun such as personal name or systematic name, or part of speech).

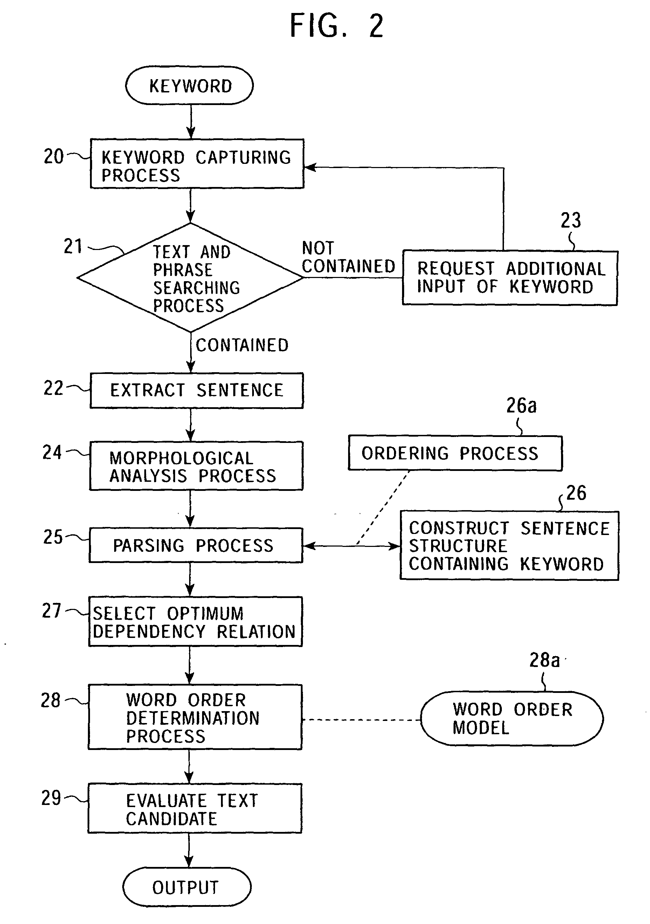

Subgraphs are extracted from the database (13) according to the above keywords and are analyzed. Figs. 2a and 2b illustrate the subgraphs having high frequencies of occurrence. Referring to Fig. 2a, the keyword (kanojo wa) is a node (parent node 1) (20), and "<noun>+e" is a node (parent node 2) (21), and "<verb>." is a node (child node) (22), and a dependency relation (23) results.

A subsequent process may be a process performed by the constructor (12b) of the text generation unit (12). However, in accordance with this embodiment, the analysis and generation performed in the text generation unit (12) is an integral process and are performed in cooperation.

It is assumed that n input keywords are in a dependency relation, and a dependency structure tree containing the n input keywords is generated. To generate the tree, the subgraphs are combined.

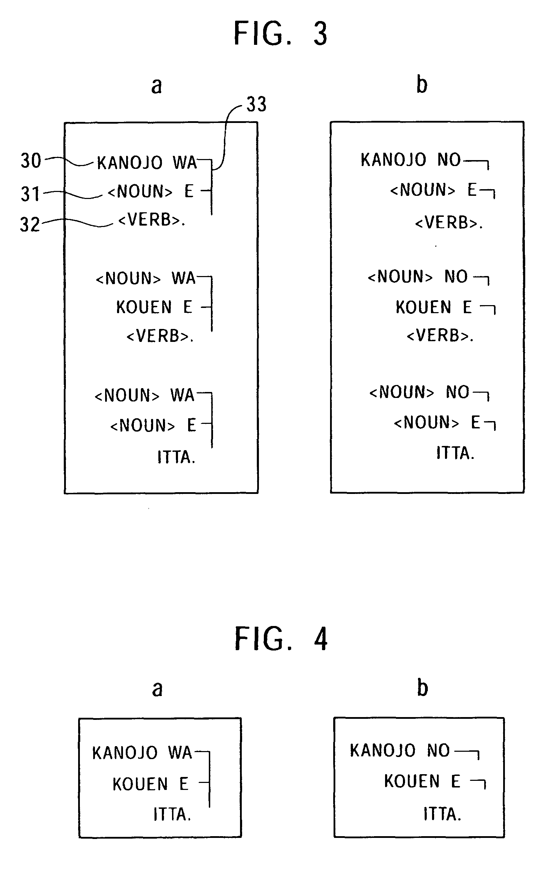

For example, the three keywords are input, and it is assumed that the three keywords are in a dependency relation, and the subgraphs are combined (in this case, aligned). Trees shown in Figs. 3a and 3b thus result.

The above-referenced dependency model is again used to select which of the two generated trees (Figs. 3a and 3b) as appropriate.

For ordering, the ratio of agreement between a combination of subgraphs, the frequency of occurrence, and the dependency relation are taken into consideration. If n is three or more, an ambiguity is present in the dependency relation between the n words. To solve the ambiguity, a dependency model is used. A word having a larger probability determined from the dependency model is ordered with higher priority.

As a result, the probability of the tree of Fig. 3a is higher, and the tree of Fig. 3a is selected as the optimum dependency relation.

In Japanese language, the limitation in word order is relatively mild, and if the dependency relation is determined, a result close to a natural text is obtained. The languages the present invention intends to cover are not limited to Japanese language. The present invention is applicable to other languages.

To contribute to the output of a more natural text in Japanese language, the most natural word order is preferably selected. In accordance with the present invention, the following re-arrangement of word order is possible.

From the tree having the higher priority, a sentence is re-arranged in the natural word order and is output. Used to this end is a word order model based on the ME model that generates a natural order sentence from a dependency structure. The database (13) may be referenced to learn the word order model.

In Japanese language that is said to free in word order, linguistic researches performed so far show a word order tendency, for example, a adverb representing time tends to appear before a subject, and a long modification phrase tends to appear in a front side of a sentence. If such tendencies are patterned in order, such a pattern becomes information effective in the generation of natural sentences. The word order here refers to the one in terms of mutual dependency, namely, the word order with respect to the same phrase. Various factors determine word order. For example, a long modification phrase tends to appear frontward than a short modification phrase. A phrase containing a context pointing word such as "sore (that)" tends to appear frontward.

The embodiment of the present invention provides a technique to learn a relationship between elements in a sentence and the tendency of word order, namely, a regularity from a predetermined text. This technique learns the word order by referring to what element contributes to the determination of word order in what degree but also what combination of the elements results what tendency of the word order. This technique thus deductively learns a text. The degree of contribution of each element is efficiently learned using the ME model. The word order is learned by sampling two phrases at a time regardless of the number of modified phrases.

To generate a sentence, the learned model is used. With the phrases in dependency relation received, the order of the dependency phrases are determined. The decision of the word order is performed as below.

All possible arrangements of the dependency phrases are considered. The probability of appropriateness of the order of the dependency phrases is determined based on the learned model with respect to each of the arrangements. The probability is then replaced with "0" or "1" respectively representing appropriateness or inappropriateness, and is then applied to the function of the probability distribution of the ME model.

The arrangement presenting the maximum overall probability is considered as a solution. Two dependency phrases are successively sampled, and the probability of the order of the two phrases is calculated. The overall probability is calculated as a product of these probabilities.

For example, an optimum word order is now determined in a sentence "kinou (yesterday)/tenisu wo (tennis)/Taro wa (personal name)/shita (played)." In the same way as already discussed, a dependency tree is produced. A structure tree having the highest probability is obtained as shown in Fig. 4.

More specifically, words modifying verb "shita." (43) include three namely, "kinou" (40), "tenisu wo" (41), and "Taro wa" (42). The order of the three words are determined.

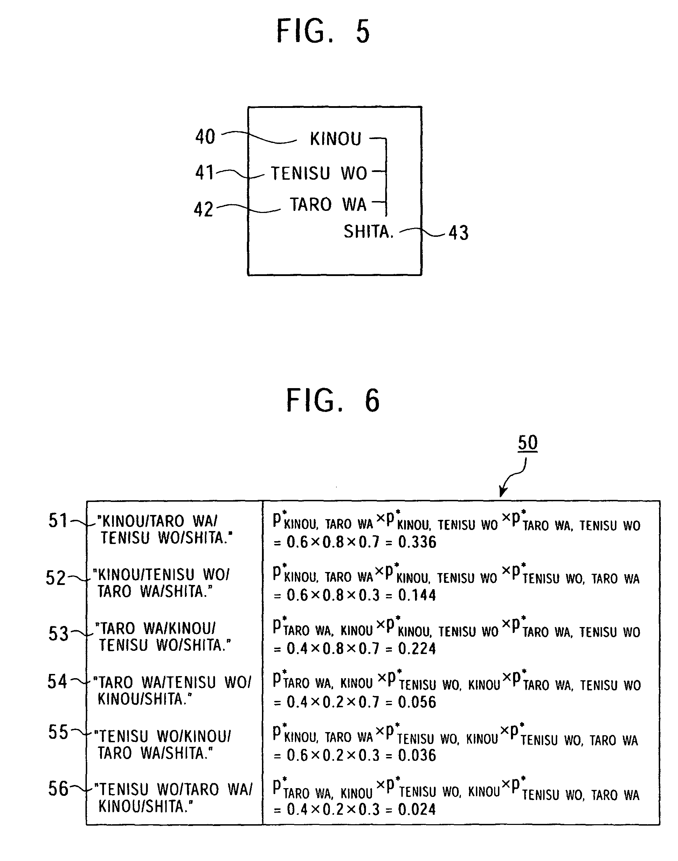

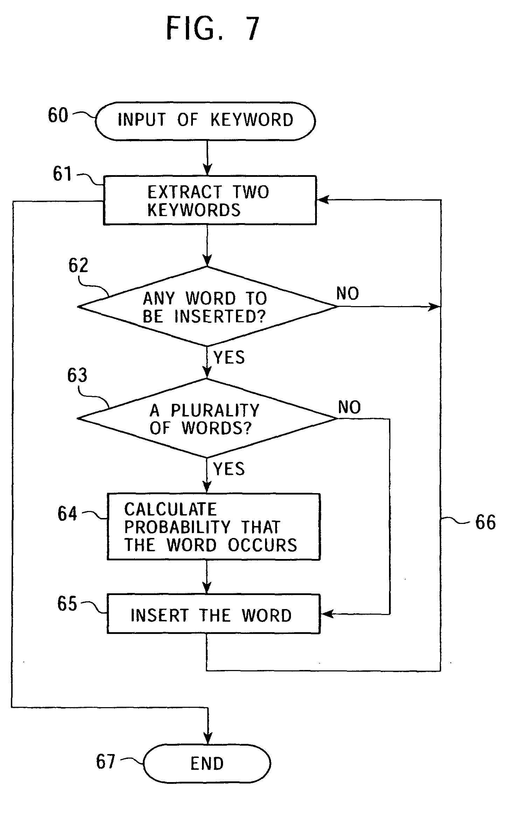

Fig. 5 illustrates a calculation example (50) of a probability that the order of the dependency phrases is appropriate.

Three combinations of two phrases, namely, "kinou" and "Taro wa", and "kinou" and "tenisu wo", and "Taro wa" and "tenisu wo" are sampled. The probability that the word is appropriate is determined based on a learned regularity.

For example, the probability of the word order of "kinou" and "Taro wa" in the chart is "p*(kinou, Taro wa)", and is assumed to be 0.6. Similarly, the word order of "kinou" and "tenisu wo" is 0.8, and the word order of "Taro wa" and "tenisu wo" is 0.7, and the probability of the word order (51) at a first row in Fig. 5 is determined by multiplying the probabilities, and is thus 0.336.

The overall probability is calculated in each of all possibilities of the 6 word orders (51 through 56), and the word order "kinou/Taro wa/tenisu wo/shita." (51) having the highest probability is determined as being an optimum word order.

Similarly, in the preceding text "kanojo wa/kouen e/itta.", probabilities of a smaller number of combinations is calculated, and the word order "kanjo wa kouen e itta." is determined as an optimum text.

If a generalized node is contained in the word order model, the node is presented as is, and a location where a personal name, a geographic name, or a date is easy to place is known.

The dependency structure is received in the word order model in the above-referenced word order model. In accordance with the embodiment of the present invention, a word order model is used in a building process of the dependency structure.

As described above, the constructor (12b) in the text generation unit (12) generates a plurality of text candidates considered as being optimum using the dependency model and the word order model. In accordance with the present invention, these candidates may be direct output from the text generation apparatus (1). However, in the discussion that follows, the text generation unit (12) includes the evaluator (12c), and the text candidates are evaluated for re-ordering.

The evaluator (12c) evaluates the text candidates by putting together various information including the order of the input keywords, the frequency of occurrence of the extracted pattern, and a score calculated from the dependency model and the word order model. The evaluator (12c) may reference the database (13).

For example, a keyword having a high order is considered as an important keyword, and a text candidate in which the keyword plays a particularly important role is evaluated as an optimum text. In the above discussion, the probability is determined separately on a per model basis, such as each of the dependency model and the word order model. Putting together these results, a comprehensive assessment may be performed.

With the evaluator (12c) functioning, a plurality of texts considered particularly optimum are ordered with rank from among the candidates formed as the natural texts.

The text generation apparatus (1) of the present invention may be incorporated into another language processing system, and may provide a plurality of outputs or a single output having the highest rank.

The text generation apparatus (1) may output texts having a rank higher than a predetermined value, or texts higher than a threshold in probability or score, and the outputs may be then manually selected.

The text generation unit (12) receives the candidates built by the constructor (12b) only. Furthermore, the evaluator (12c) may select the text candidates evaluating an entire sentence containing a plurality of texts, or evaluates the text candidates in the entire sentence as a whole, thereby deciding a single text candidate.

If a small number of phrases in an entire sentence is unnatural in the consistency between a prior phrase and a subsequent phrase, the results are returned back to the process of the parser (12a) or the constructor (12b) so that another candidate is built to output a natural text in the entire sentence.

The text (3) "kanojo wa kouen e itta." generated in an optimum syntax and word order by the text generation unit (12) is output from the text generation apparatus (1). One text (3) considered the most natural is here output.

In accordance with the present invention, a natural text is generated and output in the arrangement, different from the known art, by inputting at least one keyword (2) and by referencing the database (13).

The present invention provides an insertion method that is performed when keywords are not sufficient.

If n keywords are input, inter-word space is filled using the ME model. Two keywords out of n keywords are input to the model, and the insertion process is performed between the two keywords.

A determination is made of whether there is a word to be inserted between any two keywords. If there are a plurality of words to be inserted between the two keywords, the probability of occurrence of each of the words is determined. An insertion operation is performed starting with a word having the highest probability. This process is performed for each of any two words.

The insertion operation is terminated when the probability of "no insertion" becomes highest between any two keywords.

Even when sufficient keywords are not provided, keywords are compensated for to some degree using the ME model in the insertion process. When a natural text cannot be generated in response to the input keywords, an effective text may be output.

The insertion process may be performed in the text generation of the text generation unit.

For example, when "kanojo", "kouen", and "itta." are provided as described above, "wa", "ga", "to", etc. may occur between "kanojo" and "kouen", and "wa" having the highest probability of occurrence is inserted therebetween.

Similarly, "wa", "ga", "to", etc. may occur between the "kanojo" and "kouen", and "wa" having the highest probability of occurrence is inserted therebetween. Similarly, "e", "ni", etc. may occur between "kouen" and "itta.", and "e" having the highest probability is inserted therebetween.

By repeating the insertion, the probabilities of the insertions in all sentences are calculated, and the product of all probabilities is calculated. A combination of insertions in the entire sentence providing the highest probability is adopted, and the text is generated. In this case, "kanojo wa kouen e itta." is obtained, which is the same result as the aforementioned method of the present invention.

Based on the aforementioned text generation method, the present invention inserts keywords and generates a text using the insertion method.

The text generation method of the present invention is particularly appropriate for use in the following applications.

The text generation method finds applications in assisting aphasic in the generation of sentences. A natural sentence is generated from a broken sentence (a string of words), such as "kanojo kouen itta." and sentence candidates "kanojo ga kouen e itta.", "kanojo to kouen e itta.", etc. are output. The patient conveys a content he wants to express by simply approving a presented text. The chance of communication of the patient is thus increased.

In the case of lack of keywords, the insertion technique is used, a plurality of texts are presented, and the patient simply selects one from the texts. Such an application is sufficiently advantageous.

Incorporating an apparatus that interactively converses with the human being helps communication therebetween. More specifically, keywords are appropriately extracted from a sentence the human being voices, and a new sentence is generated, and voiced. If typical information such as 5Ws and 1H information is missing when a sentence is generated, the generation of another sentence for questioning the missing information may be contemplated.

A system having a similar arrangement may generate a natural sentence by recognizing voice, and ask a question. Human beings do not always hear distinctly a conversation, but understand the conversation by interpolating what they fail to distinctly hear. A sentence is generated based on a recognized portion of the conversation, and a question is asked. Since it is expected that a mistakenly recognized portion may be emphatically voiced in a corrected form, a correct sentence may be generated by exchanging sentences several times.

A combination of insertion techniques may provide another system that automatically creates a new story. For example, when "ojiisan (an old man), obasan (an old woman), yama (hill), and kame (turtle)" are input, Japanese folk stories of Momo Taro and Urashima Taro may be contained in a database and a new story different from the folk stories may be created. Newly inserted keywords may include "kawa (river), momo (peach), and ryugujo (the Sea God's Palace)".

The more the stories in the database, the more unexpected a resulting story becomes, and the reader finds the story difficult to associate with source stories.

A sentence and keywords within the sentence may be input, and a sentence containing the keywords and having an appropriate length may be generated. A composition writing system is thus provided. An output sentence, shorter than the original one, may be a summary. It is also contemplated that a detailed sentence is generated by adding typical information to the output sentence. The system, different from the known system, generates a sentence from the important keywords in a self-contained manner, thereby providing a more natural summary.

A sentence with a lot of redundancy, possibly written by a unskilled writer, may be corrected, and may be changed into a smoother sentence with phrases added.

The technique of the present invention may be used to convert the style of sentence. Keywords are extracted from the sentence, and a sentence is re-generated based on the keywords. Based on a database, the resulting sentence has an expression unique to the database. For example, with a novel of a certain writer used as a database, a re-written sentence may have a style of that writer.

The text generation method may be used in assisting in input of a sentence on mobile terminals that are currently in widespread use. An easy to read sentence may be produced on a mobile terminal a user has difficulty in inputting a sentence. For example, when several words are input to the terminal, sentence candidates are presented. The user selects one from the sentence candidates, thereby generating a sentence as good as one manually generated. The user simply inputs words, and is thus free from an operation to compose a sentence in detail.

If a database stores mails actually written by the user, the user composes sentences matching the user's own style during mail writing.

In accordance with the present invention, a variety of text patterns such as styles and expressions are stored in the database, and a text that accounts for the text patterns is automatically generated. A text reflecting personality is easily generated.

The database stores a text containing a plurality of characteristic text patterns, and a plurality of databases are arranged. The user designates a text pattern or switches the database, thereby generating a text having any text pattern.

By inputting keywords from itemized memos, a draft of a lecture at a meeting may be written or an article may be written. By inputting the resume of a person, a letter of introduction of the person may be written.

The present invention constructed as previously discussed provides the following advantages.

Several words are input in the input step, and a text or a phrase is extracted from the database in the extracting step. Extracted texts or phrases are combined to generate an optimum text containing the input keyword.

The extracted text is morphologically analyzed and parsed to obtain a dependency structure of the text. A more natural and precise text generation is thus achieved.

In the course of forming the dependency structure containing the keyword, the dependency probability of the entire text is determined using the dependency model. The text having the highest probability is generated as the optimum text. Thus, even more natural text generation is achieved.

In connection with word order that has conventionally been difficult to address, a text with a natural word order is generated using the word order model.

A determination is made in the text generation step whether there is a word to be inserted between any two keywords in all arrangements of the keywords using a learning model. The word insertion is performed starting with the word having the highest probability in the learning model. The word insertion is repeated until the probability that no word to be inserted is present between any two keywords becomes the highest. An optimum insertion is thus achieved. Even with a small number of keywords, a natural text is generated.

In the text generation method of the present invention, the database stores a text having characteristic text patterns. A text reflecting such characteristic text patterns is thus generated. A natural text the reader comfortably reads is thus provided.

In accordance with the present invention, the text generation apparatus performing the above-referenced text generation method is provided, and contributes to an advance of natural language processing techniques.

## Claims

1. A text generation method for generating a text including a sentence, comprising:
an input step for inputting at least a word as a keyword,
an extracting step for extracting, from a database, a text or a phrase related to the keyword, and
a text generation step for generating an optimum text based on the input keyword by combining the extracted text or phrase.

2. A text generation method according to claim 1, further comprising: in an arrangement where the text is extracted in the extracting step, morphological analyzing and persing the extracted text in the text generation step, acquiring a dependency structure of the text, and generating a dependency structure containing the keyword.

3. A text generation method according to claim 2, further comprising: in the course of generating the dependency structure containing the keyword in the text generation step, determining the probability of dependency of the entire text using a dependency model, and
wherein generating a text having a maximum probability as an optimum text.

4. A text generation method according to one of claims 2 and 3, further comprising: in the middle of or after the generation of the dependency structure in the text generation step, generating an optimum text having a natural word order based on a word order model.

5. A text generation method according to one of claims 1 through 4, further comprising: in the text generation step, determining by a learning model whether there is a word to be inserted between any two keywords in all arrangements of the keywords, and performing a word insertion process starting with a word having the highest probability in the learning model, wherein the word insertion means performs the word insertion process by including, as a keyword, or then removing the word as the keyword, repeating the cycle of word inclusion and removal until a probability that there is no word to be inserted between any keywords becomes the highest.

6. A text generation method according to one of claims 1 through 5, wherein in an arrangement where the database contains a text having a characteristic text pattern, the text generation step generates a text in compliance with the characteristic text pattern.

7. A text generation apparatus for generating a text of a sentence, comprising:
input means for inputting at least one word as a keyword,
extracting means for extracting, from a database containing a plurality of texts, a text or a phrase related to the keyword, and
text generation means for generating an optimum text based on the input keyword by combining the extracted text or phrase.

8. A text generation apparatus according to claim 7, wherein in an arrangement where the text extracting means extracts the text, the text generation means comprises parser means for morphologically analyzing and parsing the extracted text, and acquiring a dependency structure of the text, and dependency structure generation means for generating a dependency structure containing the keyword.

9. A text generation apparatus according to claim 8, wherein in the text generation means, the dependency structure generation means determines the probability of dependency of the entire text using a dependency model, and
generates a text having a maximum probability as an optimum text.

10. A text generation method according to one of claims 8 and 9, wherein in the middle of or prior to the generation of the dependency structure, the text generation means generates an optimum text having a natural word order based on a word order model.

11. A text generation apparatus according to one of claims 7 through 10, wherein the text generation means comprises word insertion means that determines, using a learning model, whether there is a word to be inserted between any two keywords in all arrangements of the keywords, and performs a word insertion process starting with a word having the highest probability in the learning model,
wherein the word insertion means performs the word insertion process by including, as a keyword, or then removing the word as the keyword, and by repeating the cycle of word inclusion and removal until a probability that there is no word to be inserted between any keywords becomes the highest.

12. A text generation apparatus according to one of claims 7 through 11, wherein in an arrangement where the database contains a text having a characteristic text pattern, the text generation means generates a text in compliance with the characteristic text pattern.

13. A text generation apparatus according to claim 12, comprising pattern selecting means that contains one or a plurality of databases containing texts having a plurality of characteristic text patterns, and selects a desired text pattern from the plurality of text patterns.
